# EUROPEAN PATENT APPLICATION

(11) **EP 3 705 512 A1**
(43) Date of publication of application: **09.09.2020**
(21) Application number: 20159304.3
(22) Date of filing: 25.02.2020
(51) Int. Cl.: C08J 5/04, C08K 7/02, C08L 23/12, C08L 71/02

(54) **HYDROPHILIC CELLULOSE COMPOSITE RESIN MOLDED BODY**

(30) Priority: 08.03.2019 JP 2019042711
(71) Applicant: Panasonic Intellectual Property Management Co., Ltd., Osaka-shi, Osaka 540-6207 (JP)
(72) Inventor: HAMABE, Masashi, Osaka, 540-6207 (JP); NAGINO, Toshifumi, Osaka, 540-6207 (JP); IMANISHI, Masayoshi, Osaka, 540-6207 (JP); TAKAHASHI, Yoshie, Osaka, 540-6207 (JP)
(74) Representative: Vigand, Philippe

(57) **Abstract**

A composite resin molded body includes a main resin and a plurality of fibrous fillers dispersed in the main resin, in which some fibrous filler of the plurality of fibrous fillers are exposed to the surface, and central portions of the fibrous fillers exposed to the surface are exposed to the surface.

## Description

### BACKGROUND

### 1. Technical Field

The present disclosure relates to a composite resin molded body capable of realizing a molded body having excellent hydrophilicity.

### 2. Description of the Related Art

So-called "general-purpose plastics" such as polyethylene (PE), polypropylene (PP), polystyrene (PS), and polyvinyl chloride (PVC) are not only very inexpensive, but also easy to mold, and a weight is a fraction of the weight of metals or ceramics. Therefore, general-purpose plastics are often used as materials for various daily necessities such as bags, various packaging, various containers, and sheets, and also used as materials for industrial components such as automobile parts, electrical parts, and daily necessities, and miscellaneous goods.

However, the general-purpose plastics have drawbacks such as insufficient mechanical strength. Therefore, the general-purpose plastics do not have sufficient properties required for materials used in various industrial products such as machinery products such as automobiles and electrical, electronic and information products, and the scope of application is currently limited.

On the other hand, so-called "engineer plastics" such as polycarbonate, a fluororesin, an acrylic resin, and polyamide have excellent mechanical properties, and used in machinery products such as automobiles and various industrial products such as electrical, electronic, and information products. However, engineered plastics are expensive, difficult to recycle monomers, and thus have a large environmental burden.

In this regard, there is a demand for greatly improving the material properties (such as mechanical strength) of general-purpose plastics. In order to reinforce the general-purpose plastics, a technique of improving the mechanical strength of the general-purpose plastics by dispersing a natural fiber that is a fibrous filler, a glass fiber, and a carbon fiber in a resin of the general-purpose plastics has been known. Among them, an organic filler such as cellulose has been attracting attention as a reinforcing material from the viewpoint of inexpensive and excellent environmental properties when discarded.

For sanitary products around the water, such as a bathroom, a toilet, and a washroom, and home appliances such as a washing machine and a dish dryer, molded components used for exterior and interior components are required to have an anti-fog function (characteristics that prevent condensation and droplets from sticking) by imparting hydrophilicity, in addition to mechanical strength, as a measure to reduce drying time and prevent scaling. In addition, foaming for washing is required in sanitary products, home appliances such as a washing machine and a dish dryer, and foaming for smooth touch is required in food home appliances such as a mixer and a blender. For example, on a surface that has both hydrophobicity and hydrophilicity, the wettability of the liquid between a hydrophilic part and a hydrophobic part is different, and fine bubbles are likely to be generated. Each company has been studying to impart the hydrophilicity to the composite resin, and for example, in Japanese Patent No. 4296528, in a porous molded body of a resin composition containing a cellulosic material, a water-insoluble thermoplastic resin, and a water-soluble substance, by eluting and removing the water-soluble substance, the cellulosic material is exposed or fuzzed from the surface of the molded body, thereby realizing a porous resin molded body having hydrophilicity.

### SUMMARY

A composite resin molded body according to the present disclosure includes
a main resin; and
a plurality of fibrous fillers dispersed in the main resin,
in which
central portions of a part of the plurality of fibrous fillers are exposed to a surface of the molded body.

### BRIEF DESCRIPTION OF THE DRAWINGS

FIG. 1 is a schematic sectional view illustrating a composite resin molded body according to a first exemplary embodiment;
FIG. 2A is a schematic view of a fibrous filler that is a component of the composite resin molded body according to the first exemplary embodiment;
FIG. 2B is a partially enlarged view including an end portion of a fibrous filler in FIG. 2A;
FIG. 3 is a schematic view of a producing process of a composite resin molded body according to the first exemplary embodiment;
FIG. 4 is a scanning electron microscope image of a surface of the composite resin molded body according to the first exemplary embodiment; and
FIG. 5 is a diagram illustrating a configuration and a measurement result of a composite resin molded body in examples and comparative examples in the embodiment.

### DETAILED DESCRIPTION

In Japanese Patent No. 4296528, a cellulose material is exposed to the surface by elution of the water-soluble resin by immersion in water, and the hydrophilicity of the resin is improved. However, dimensional change occurs due to the elution of the water-soluble resin. In addition, it becomes porous and the rigidity is decreased. In addition, there was a problem that it was necessary to elute the water-soluble resin, resulting in poor productivity.

An object of the present disclosure is to solve the above-mentioned problems in the related art, and is to realize a composite resin molded body having hydrophilicity without performing a treatment for imparting hydrophilicity after molding.

According to a first aspect, there is provided a composite resin molded body including
a main resin; and
a plurality of fibrous fillers dispersed in the main resin,
in which
central portions of a part of the plurality of fibrous fillers are exposed to the surface of the molded body.

According to a second aspect, in the composite resin molded body of the first aspect, the plurality of fibrous fillers in the composite resin molded body may not be hydrophobized in advance.

According to a third aspect, in the composite resin molded body of the first or second aspect, a concentration of a part of the plurality of fibrous fillers in a surface layer of the composite resin molded body may be higher than a concentration of a part of the plurality of fibrous fillers inside the surface layer of the composite resin molded body.

According to a fourth aspect, the composite resin molded body of any one of the first to third aspects, further includes
a plurality of amphiphilic block copolymers, in which
a concentration of a part of the plurality of amphiphilic block copolymers in a surface layer of the composite resin molded body may be higher than a concentration of a part of the plurality of amphiphilic block copolymers inside the surface layer of the composite resin molded body.

According to a fifth aspect, in the composite resin molded body in any one of the first to fourth aspects, end portions of the plurality of fibrous fillers in the composite resin molded body may be defibrated, and the defibrated end portions may be present in the composite resin molded body.

According to a sixth aspect, in the composite resin molded body in any one of the first to fifth aspects, the plurality of fibrous fillers may be natural fibers.

According to a seventh aspect, in the composite resin molded body in any one of the first to sixth aspects, the main resin may be an olefin resin.

Hereinafter, the composite resin molded body according to the embodiment will be described with reference to the accompanying drawings. In the following description, the same components are denoted by the same reference numerals, and description thereof is omitted as appropriate.

### First exemplary embodiment

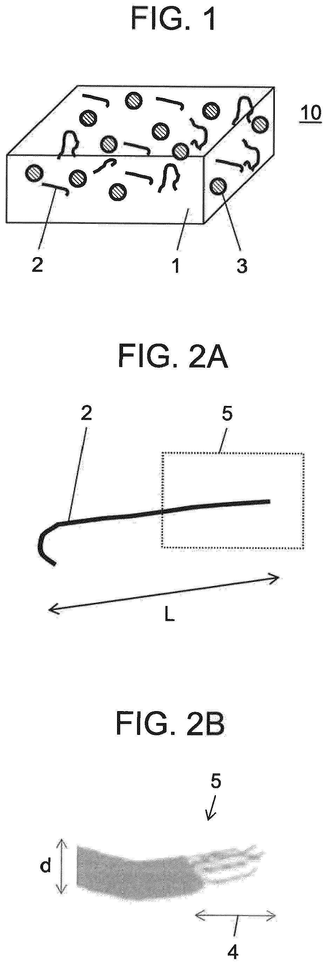

FIG. 1 is a schematic sectional view illustrating a composite resin molded body 10 according to a first embodiment. FIG. 2A is a schematic view of a fibrous filler that is a component of composite resin molded body 10 according to the first embodiment. FIG. 2B is a partially enlarged view including end portion 5 of fibrous filler 2 in FIG. 2A.

The composite resin molded body 10 according to the first embodiment includes a melt-kneaded product containing main resin 1, fibrous filler 2, and additive 3. As illustrated in the schematic sectional view of FIG. 1, composite resin molded body 10 includes fibrous filler 2 and additive 3 dispersed in main resin 1. In addition, on the surface of composite resin molded body 10, central portions of some fibrous fillers 2 of a plurality of fibrous fillers 2 is exposed on the surface.

According to the composite resin molded body 10, since the central portions of some fibrous fillers 2 are exposed on the surface, in addition to increasing the elastic modulus, a composite resin molded body having high hydrophilicity and excellent appearance can be realized.

Hereinafter, constituent members constituting a composite resin molded body will be described.

### Main resin

In the exemplary embodiment, main resin 1 is preferably a thermoplastic resin in order to ensure excellent moldability. Examples of the thermoplastic resin include an olefin resin (including a cyclic olefin resin), a styrene resin, a (meth)acrylic resin, an organic acid vinyl ester resin or derivatives thereof, a vinyl ether resin, a halogen containing resin, a polycarbonate resin, a polyester resin, a polyamide resin, a thermoplastic polyurethane resin, a polysulfone resin (such as polyethersulfone, polysulfone), a polyphenylene ether resin (such as a polymer of 2,6-xylenol), a cellulose derivative (such as cellulose esters, cellulose carbamates, and cellulose ethers), a silicone resin (such as polydimethyl siloxane and polymethyl phenyl siloxane), a rubber or an elastomer (diene rubber such as polybutadiene and polyisoprene, a styrene-butadiene copolymer, an acrylonitrile-butadiene copolymer, an acrylic rubber, a urethane rubber and a silicone rubber), biomass plastics (such as polylactic acid, polybutylene succinate, polyhydroxyalkanoic acid, and other biodegradable resins). The resin may be used alone or two or more types thereof may be used in combination. Main resin 1 is not limited to the above materials as long as it has thermoplasticity.

Among these thermoplastic resins, main resin 1 is preferably an olefin resin having a relatively low melting point. Examples of the olefin resin include a copolymer of olefin monomers, a copolymer of an olefin monomer and other copolymerizable monomers, in addition to homopolymers of olefin monomers. Examples of the olefin monomer include chain olefins (such as α-C2-20 olefins such as ethylene, propylene, 1-butene, isobutene, 1-pentene, 4-methyl-1-pentene, 1-octene); and cyclic olefins. These olefin monomers may be used alone or two or more types thereof may be used in combination. Among the olefin monomers, chain olefins such as ethylene and propylene are preferable. Examples of other copolymerizable monomers include fatty acid vinyl esters such as vinyl acetate and vinyl propionate; (meth)acrylic monomers such as (meth)acrylic acid, alkyl (meth)acrylate, glycidyl (meth)acrylate; unsaturated dicarboxylic acids or anhydrides thereof such as maleic acid, fumaric acid, and maleic anhydride; vinyl esters of carboxylic acids (such as vinyl acetate and vinyl propionate); cyclic olefins such as norbornene and cyclopentadiene; and dienes such as butadiene and isoprene. These copolymerizable monomers may be used alone or two or more types thereof may be used in combination. Specific examples of the olefin resin include polyethylene (such as low density, medium density, high density, or linear low density polyethylene), polypropylene, an ethylene-propylene copolymer, a copolymer of chain olefins (particularly α-C2-4 olefins) such as terpolymers such as ethylene-propylene-butene-1.

### Additive

Next, additive 3 will be described. Additive 3 preferably has hydrophilicity and can impart anti-fogging property to the resin. Preferable examples of the additive include a homopolymer of polyethylene oxide, polyethylene glycol, methyl cellulose, carboxymethyl cellulose, polyacrylamide, polyvinyl alcohol, starch, polyvinyl ether, polyacrylic acid, polymethacrylic acid, polyitaconic acid, a polyvinyl pyrrolidone resin, or a copolymer thereof. In the case of the amphiphilic block copolymer, one molecule has both a hydrophilic group and a hydrophobic group, the hydrophobic group is compatible with a resin, and the hydrophilic group is compatible with a hydrophilic fibrous filler. In addition, the hydrophilic group is more preferable because it has an effect of improving the hydrophilicity of the molded body near the surface. Examples of the additive include various titanate coupling agents, silane coupling agents, unsaturated carboxylic acid, maleic acid, maleic anhydride, or modified polyolefin grafted with anhydrides thereof, fatty acid, fatty acid metal salt, and fatty acid ester. Further, a solid water-soluble inorganic compound such as calcium chloride, magnesium chloride, calcium hydrogen carbonate, or sodium chloride is also preferable. The additive is appropriately selected depending on the combination of main resin 1 and fibrous filler 2. Note that, additive 3 is not limited to the above materials as long as it has a property capable of imparting the hydrophilicity.

The silane coupling agent is preferably an unsaturated hydrocarbon type or an epoxy type. There is no problem even if the surface of the additive is treated and modified with a thermosetting or thermoplastic polymer component. The content of the additive in the composite resin molded body in the exemplary embodiment is preferably greater than or equal to 0.01% by mass and less than or equal to 20% by mass, is more preferably greater than or equal to 0.1% by mass and less than or equal to 10% by mass, and is still more preferably greater than or equal to 0.5% by mass and less than or equal to 5% by mass. When the content of the additive is less than 0.01% by mass, poor dispersion occurs. On the other hand, when the content of the additive exceeds 20% by mass, the strength of the composite resin molded body is decreased.

### Fibrous filler

Next, fibrous filler 2 will be described. In this exemplary embodiment, fibrous filler 2 (hereinafter, sometimes simply referred to as "fiber") contained in composite resin molded body in the present embodiment is mainly used for the first purpose of improving mechanical properties and improving a dimensional stability due to reduction in a coefficient of linear expansion in resin molded body molded using a composite resin composition. For this purpose, fibrous filler 2 preferably has a higher elastic modulus than main resin 1. Specific examples thereof include a carbon fiber, a carbon nanotube, a pulp, cellulose, a cellulose nanofiber, lignocellulose, a lignocellulose nanofiber, a basic magnesium sulfate fiber (magnesium oxysulfate fiber), a potassium titanate fiber, an aluminum borate fiber, a calcium silicate fiber, a calcium carbonate fiber, a silicon carbide fiber, wollastonite, zonotlite, various metal fibers, natural fibers such as cotton, silk, and wool or hemp, a rejuvenated fiber such as a jute fiber, rayon, or cupra, semi-synthetic fibers such as acetate and promix, synthetic fibers such as polyester, polyacrylonitrile, polyamide, aramid, and polyolefin, and modified fibers obtained by chemically modifying those surfaces and terminals. Among them, from the viewpoint of availability, high elastic modulus, low coefficient of linear expansion, carbons and celluloses are particularly preferable.

The second purpose of adding fibrous filler 2 is to improve hydrophilicity. For this purpose, the fibrous filler is preferably hydrophilic, and preferable examples thereof include pulp, cellulose, cellulose nanofiber, lignocellulose, lignocellulose nanofiber, natural fibers such as cotton, silk, wool, or hemp, and regenerated fibers such as jute fibers, rayon or cupra. Even fibers with the hydrophobic properties other than those mentioned above can be given the hydrophilicity by an appropriate surface treatment and used for this purpose. Fibrous filler 2 is not limited to the above materials as long as it can improve the mechanical properties and has hydrophilicity.

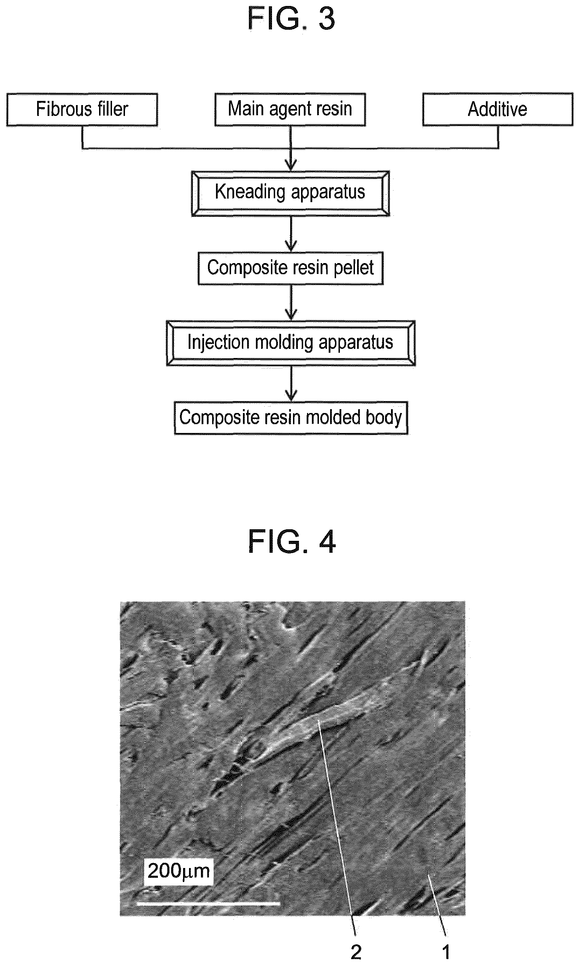

The form of the fibrous filler in the composite resin molded body will be described. In order to improve the mechanical properties, the greater the bonding interface between the fibrous filler and the resin, the higher the elastic modulus, and thus, the specific surface area of the fibrous filler is preferably high. On the other hand, it is preferable that the fibrous filler is exposed on the surface of the composite resin molded body in order to improve the hydrophilicity; however, the smaller the specific surface area of the fibrous filler exposed on the surface, the higher the hydrophilicity. In a case where the specific surface area of the fibrous filler exposed on the surface is large, the water repellency is enhanced by the effect of fine irregularities. By adjusting the molding conditions to increase the shrinkage speed during molding of the resin molded body, and by defibrating only the end portion of the fibrous filler as illustrated in FIG. 2, a structure satisfying the above can be obtained. In other words, by increasing the shrinkage speed during molding, the fibrous filler is more likely to be exposed on the surface. Furthermore, the central portion of the fibrous filler that has a small specific surface area and is not defibrated has little entanglement with the resin, and is easily exposed to the surface depending on the molding conditions. Conversely, the tip end part of the defibrated fibrous filler is often entangled with the resin and enters the inside thereof with the resin. With this, it possible to obtain a composite resin molded body in which the central portion not including both end portions of the fibrous filler is exposed to the surface. FIG. 4 illustrates a scanning electron microscope (SEM) image of the surface of the molded body in the embodiment. As can be seen from FIG. 4, only the central portion of the fibrous filler is exposed to the surface. The tip defibration site is preferably 5% or more and 50% or less of a fiber length L of the entire fibrous filler 2. If the defibration site is less than 5% of the entire fiber length L, the specific surface area is small and no improvement is seen in the elastic modulus, and if the defibration site is 50% or more, defibration site 4 having a large aspect ratio is exposed to the surface, and the hydrophilicity is deteriorated.

Next, the state of the presence of the fibrous filler in the composite resin molded body will be described. As mentioned above, it is possible to segregate the fibrous filler to the vicinity of the surface of the molded body depending on the molding conditions. As a result, the fibrous filler is present more on the surface layer than the inside of the molded body. With this, many additives can be present in the vicinity of the surface layer. Since both the fibrous filler and the additive have hydrophilic properties, those are easily compatible with each other, and are present close to each other by intermolecular bonding or hydrogen bonding. As a result, the filler is pulled by the fibrous filler, and more additives are present in the surface layer than inside the molded body. In addition to the fibrous filler, the presence of additives in the vicinity of the surface layer of the molded body can further improve the hydrophilicity. In addition, when viewed as a molded body, the more the fibrous filler is present in the surface layer of the molded body, the higher the modulus of elasticity on the outside, and the greater the rigidity of the molded body as a whole. For this reason, the structure in which the fibrous filler segregates in the vicinity of the surface of the molded body also leads to improvement in the rigidity.

In a case where the composite resin pellets are applied to places requiring coloring into a plurality of colors including white, such as white household appliances, the fibrous filler composite resin is required to be colored. In order for the composite resin to have coloring properties, the whiteness of the composite resin is required to be maintained, and the whiteness of the fibrous filler to be added is required to be maintained. It is preferable that an L value by the color difference measurement of the fibrous filler is high, and the L value of the fibrous filler that improves the degree of coloring of the molded body is calculated experimentally, and the L value is preferably 85 or more.

A fiber state of the composite resin molded body will be described. In order to improve the coloring property of the molded body, it is preferable that the whiteness of the surface layer of the molded body is high. Therefore, the L value obtained by measuring the color difference of the molded body differs in the cross direction, and the L value on the surface layer side is preferably larger than the L value on the inner side.

Next, the characteristics of fibrous filler 2 will be described. The types of main resin 1 and fibrous filler 2 are as described above, and if fibrous filler 2 is excessively soft with respect to main resin 1, that is, if the elastic modulus is small, the composite resin molded body has a low elastic modulus as a whole, resulting in a decrease in strength. On the other hand, if fibrous filler 2 is excessively hard with respect to main resin 1, that is, the elastic modulus is large, the impact wave generated at the time of impact is not propagated and is absorbed at the interface between main resin 1 and fibrous filler 2, so that cracks and crazes are likely to occur near the interface, resulting in a decrease in the impact strength. Therefore, the relationship between the elastic moduli of main resin 1 and fibrous filler 2 is preferably higher in the elastic modulus of fibrous filler 2, and the difference is preferably as small as possible. The optimum relationship is calculated from the simulation results, and the difference in the elastic modulus between main resin 1 and fibrous filler 2 is preferably within 20 GPa.

In addition, these fibrous fillers 2 may be subjected to surface treatment for the purpose of improving the adhesiveness with main resin 1 or the dispersibility in the composite resin molded body, but in a case of using hydrophilic fibrous fillers, in order to maintain the hydrophilicity, it is preferable not to perform a surface treatment in advance. That is, the fibrous filler 2 is preferably not hydrophobized in advance. In other words, it is preferable not to substantially change the chemical state of the surface of fibrous filler 2 (particularly, it is preferable not to reduce the number of hydroxyl groups (OH groups)).

### Method of producing composite resin molded body

Next, a method of producing a composite resin molded body will be described. FIG. 3 is a flowchart of a producing process of the composite resin molded body according to the exemplary embodiment.
(1) A main resin, a fibrous filler, and an additive are put into a melt-kneading apparatus and the mixture is melt-kneaded in the apparatus. As a result, the main resin is melted, and the fibrous filler and the additive are dispersed in the molten main resin. At the same time, due to a shearing action of the apparatus, defibration of aggregates of the fibrous filler is promoted, and the fibrous filler can be finely dispersed in the main resin. At this time, the end portions of the fibrous filler are also defibrated.
   In the related art, as the fibrous filler, those obtained by defibrating fibers in advance by pretreatment such as wet dispersion have been used. However, when the fibrous filler is defibrated in advance in a solvent used for wet dispersion, since it is easy to be defibrated as compared with a case of being defibrated in the melted main resin, it is difficult to defibrate only the end portions, and the entire fibrous filler may be defibrated. In addition, there was a problem that the number of steps was increased by adding the pretreatment, and the productivity was deteriorated.
   On the other hand, in the producing process of the composite resin molded body in the exemplary embodiment, a melt-kneading treatment (total dry method) is performed together with the main resin and the dispersant without the pretreatment by wet dispersion for the purpose of a defibration of the fibrous filler. In this method, since the wet dispersion treatment of the fibrous filler is not performed, as described above, only the end portion of the fibrous filler can be defibrated, and the number of steps can be reduced to improve the productivity.
   In order to produce the fibrous filler in the embodiment by the total dry method, it is preferable that high shear stress is applied during kneading, and specific examples of kneading means include methods with a single-screw kneader, a twin-screw kneader, a roll kneader, a Banbury mixer, and a combination thereof. From the viewpoint of easy application of high shear and high productivity, continuous biaxial kneaders and continuous roll kneaders are particularly preferred. The kneading means other than the above may be used as long as it can apply a high shear stress.
(2) The composite resin composition extruded from a melt-kneader is made into a pellet shape through a cutting step by a pelletizer or the like. Examples of the pelletization methods that can be performed immediately after resin melting include an air hot cut method, an underwater hot cut method, and a strand cut method, alternatively, there is a pulverization method in which a molded body or sheet is once formed and then pulverized and cut.
(3) By injection molding the pellet, an injection molded body as a composite resin molded body can be produced. By mixing the fibrous filler in the pellet as described above, an injection molded body having excellent elastic modulus, impact resistance, and appearance can be obtained.

Hereinafter, each example and each comparative example in the experiment conducted by the present inventors will be described.

### Example 1

In Example 1, a pulp-dispersed polypropylene composite resin molded body was produced by the following production method.
(1) Softwood pulp (trade name: NBKP Celgar, manufactured by Mitsubishi Paper Mills Limited.) was used as a starting material for the fibrous filler. The softwood pulp was pulverized with a pulverizer to obtain a fibrous filler. The end portion defibration was adjusted in the pulverizing process. Polypropylene as the main resin (trade name: J108M, prepared by Prime Polymer Co., Ltd.), a mixture of the above fibrous filler and a block copolymer of polypropylene, and polyethylene oxide as an additive (trade name: PELECTRON, prepared by Sanyo Chemical Industries, Ltd.) were weighed to a weight ratio of 85:15:5 and were dry blended.
(2) Thereafter, the mixture was melt-kneaded and dispersed with a twin-screw kneader (KRC Kneader manufactured by Kurimoto, Ltd.). By changing the screw configuration of the twin-screw kneader, the shearing force can be changed. In Example 1, the medium shear type was used. The resin melt was hot-cut to produce a pulp-dispersed polypropylene pellet.
(3) Using the prepared pulp-dispersed polypropylene pellets, a test piece of a composite resin molded body was produced by an injection molding machine (180AD, manufactured by The Japan Steel Works, Ltd.). The test piece was prepared under the following manufacturing conditions: resin temperature of 190°C, mold temperature of 60°C, injection speed of 60 mm/s, and holding pressure of 80 Pa. The shape of the test piece was changed according to the evaluation items described below, and a No. 1 size dumbbell was manufactured for measuring the elastic modulus. A flat plate with 60 mm square and a thickness of 1.6 mm was manufactured for measuring hydrophilicity. The obtained pulp-dispersed polypropylene composite resin molded body test piece was evaluated by the following method.

### Defibration of fiber end portion

The obtained pulp-dispersed polypropylene pellet was immersed in a xylene solvent to dissolve the polypropylene, and the shape of the remaining pulp fibers was observed by SEM. The end portions of the fibers were in a defibrated state.

### Elastic modulus of composite resin molded body

A tensile test was carried out using the obtained No. 1 dumbbell-shaped test piece. Here, as the evaluation method of the elastic modulus, the numerical value of less than 1.8 GPa was evaluated as C, the value of greater than or equal to 1.8 GPa and less than 2.1 GPa was evaluated as B, and the value of greater than or equal to 2.1 GPa was evaluated as A. The elastic modulus of the test piece was 2.1 GPa, and was evaluated as A.

### Hydrophilicity evaluation of composite resin molded body

The anti-fogging property was evaluated using the obtained flat test pieces. Specifically, water spray was sprayed on the surface of the test piece using a STRI method (spray method), and the water repellency of the test piece was evaluated with the distribution of water droplets by observing the water repellency of the test piece from above. Here, as a judgment of the anti-fogging property, those where only individual water droplets were formed on the test piece were evaluated as C, those where the area of some completely wetted parts is less than 50% of the total test pieces were evaluated as B, those where the completely wetted parts are 50% or more of the test piece were evaluated as A, and those where the completely wetted portion was 70% or more of the test piece were evaluated as AA. The evaluation result of the anti-fogging property of the test piece was AA.

### Example 2

In Example 2, a pulp-dispersed polypropylene pellet and a molded body were produced under the same material conditions and process conditions as in Example 1 except that the fibrous filler was changed to hemp-derived cellulose. Regarding the evaluation, the same evaluation as in Example 1 was performed.

### Example 3

In Example 3, a pulp-dispersed polypropylene pellet and a molded body were produced under the same material conditions and process conditions as in Example 1 except that pulp pulverization was not performed. Regarding the evaluation, the same evaluation as in Example 1 was performed.

### Example 4

In Example 4, a pulp-dispersed polypropylene pellet and a molded body were produced under the same material conditions and process conditions as in Example 1 except that the starting material pulp is previously hydrophobized with a silane coupling agent. Regarding the evaluation, the same evaluation as in Example 1 was performed.

### Example 5

In Example 5, the mold temperature during molding was set to 120°C, and the resin was gradually cooled so that the fibers and additives flowed inward. A pulp-dispersed polypropylene pellet and a molded body were produced under the same material conditions and process conditions as in Example 1 except for the above condition. Regarding the evaluation, the same evaluation as in Example 1 was performed.

### Example 6

In Example 6, PET fiber was used as the fibrous filler. A pulp-dispersed polypropylene pellet and a molded body were produced under the same material conditions and process conditions as in Example 1 except for the above condition. Regarding the evaluation, the same evaluation as in Example 1 was performed.

### Comparative Example 1

In Comparative Example 1, a resin-only layer was molded as an outer layer of the molded body by two-layer molding. A pulp-dispersed polypropylene pellet and a molded body were produced under the same material conditions and process conditions as in Example 1 except for the above condition. Regarding the evaluation, the same evaluation as in Example 1 was performed.

### Comparative Example 2

In Comparative Example 2, the injection direction was changed to the thickness direction of the flat plate, and the fiber was easily oriented in the thickness direction. After that, the end portion of the fiber was appeared to the surface of the molded body by shaving the surface of the molded body. A pulp-dispersed polypropylene pellet and a molded body were produced under the same material conditions and process conditions as in Example 1 except for the above condition. Regarding the evaluation, the same evaluation as in Example 1 was performed.

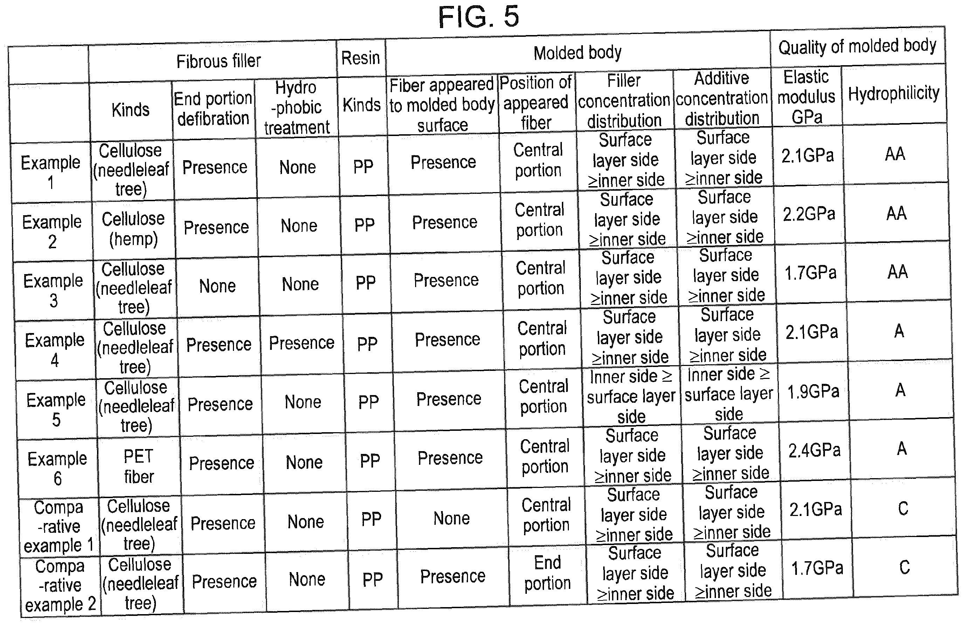

The configuration of the composite resin molded body and the measurement results in Examples 1 to 6 and Comparative Examples 1 and 2 are illustrated in FIG. 5.

As is apparent from FIG. 5, in Example 2 in which the fibrous filler was changed to cellulose derived from hemp, since the fiber length of hemp was slightly longer, the elastic modulus increased slightly to 2.2 GPa; however, due to the hydrophilic nature of the natural fiber, the hydrophilicity was evaluated as AA even as a molded body. The fibers are defibrated at the end portions and are not pre-hydrophobized, and if the central portion of the fiber is exposed to the surface of the molded body and the concentration distribution of the filler and the additive is higher on the surface side, it was confirmed that a composite resin with high elastic modulus and high hydrophilicity was able to be obtained.

In Example 3 in which the pulp pulverization was not performed, the fiber end portions were hardly defibrated. As a result, the elastic modulus was slightly reduced to 1.7 GPa, but the hydrophilicity was evaluated as AA.

In Example 4 in which the starting material pulp was subjected to a hydrophobic treatment in advance with a silane coupling agent, the compatibility between the resin and the fiber was good, and the elastic modulus was not decreased; however, the hydrophilicity of the fiber was slightly decreased due to the hydrophobicity, but the hydrophilicity of the molded body was evaluated as A.

By setting the mold temperature during molding to 120°C and gradually cooling the resin, in Example 5, the fiber and the additive were allowed to flow inward, the ratio of the fiber and the additive in the molded body was such that the inner side ≥ the surface layer side. As a result, the elastic modulus was slightly reduced to 1.9 GPa, and the hydrophilicity was slightly deteriorated, but was evaluated as A.

In Example 6 in which the PET fibers were used as the fibrous filler, the hydrophilicity of the fibers was slightly low, and the hydrophilicity was evaluated as A.

In Comparative Example 1 in which a resin-only layer was molded as the outer layer of the molded body by two-layer molding, no fibers appeared on the surface of the molded body. As a result, the hydrophilicity of the surface of the molded body was reduced, and the hydrophilicity of the molded body was evaluated as C.

The injection direction was changed to the thickness direction of the flat plate, and the fibers were easily oriented in the thickness direction, and then, in Comparative Example 2 in which the end portion of the fiber was appeared on the surface of the molded body by shaving the surface of the molded body, fluffy fibers appeared on the surface of the molded body. As a result, the specific surface area of the fibers remaining in the resin was low, and the elastic modulus was decreased to 1.7 GPa. In addition, since the fluffy fibers were appeared, the surface became water-repellent due to the unevenness effect, and the hydrophilicity was evaluated as C.

From the above evaluation, by using the hydrophilic fibers which are natural fibers, the fibers are defibrated at the end portions and are not pre-hydrophobized, and if the central portion of the fiber is appeared to the surface of the molded body and the concentration distribution of the filler and the additive is higher on the surface layer side, it was confirmed that a composite resin molded body with high elastic modulus as molded and high hydrophilicity was able to be obtained. In other words, a composite resin molded body having hydrophilicity was able to be molded simply by performing a molding treatment without performing a treatment for imparting hydrophilicity after molding (for example, hydrophilic coating or a surface treatment such as surface roughening).

Note that, the present disclosure includes appropriate combinations of any exemplary embodiment and/or example among the above-described various exemplary embodiments and/or examples, and exhibits an effect of each exemplary embodiment and/or example.

According to the composite resin molded body of the present disclosure, in addition to increasing the elastic modulus, a composite resin molded body having high hydrophilicity and excellent appearance can be realized.

According to the composite resin molded body of the present disclosure, it is possible to provide a molded body that is excellent in the mechanical strength and the hydrophilicity as compared with the general-purpose resin in the related art. According to the present disclosure, since the properties of the main resin can be improved, it can be used as an alternative to engineering plastics or an alternative to metallic materials. Therefore, the manufacturing cost of various industrial products made of engineering plastics or metals, or daily necessities can be greatly reduced. It can also be used for home appliance casings, building materials, automotive parts and daily necessities.

## Claims

1. A composite resin molded body comprising:
a main resin;
a plurality of fibrous fillers dispersed in the main resin,
wherein central portions of a part of the plurality of fibrous fillers are exposed to a surface of the composite resin molded body.

2. The composite resin molded body of Claim 1,
wherein the plurality of fibrous fillers in the composite resin molded body are not hydrophobized in advanced.

3. The composite resin molded body of Claim 1 or 2,
wherein a concentration of a part of the plurality of fibrous fillers in a surface layer of the composite resin molded body is higher than a concentration of a part of the plurality of fibrous fillers inside the surface layer of the composite resin molded body.

4. The composite resin molded body of any one of Claims 1 to 3, further comprising:
a plurality of amphiphilic block copolymers,
wherein a concentration of a part of the plurality of amphiphilic block copolymers in a surface layer of the composite resin molded body is higher than a concentration of a part of the plurality of amphiphilic block copolymers inside the surface layer of the composite resin molded body.

5. The composite resin molded body of any one of Claims 1 to 4,
wherein end portions of the plurality of fibrous fillers in the composite resin molded body are defibrated, and the defibrated end portions are present in the composite resin molded body.

6. The composite resin molded body of any one of Claims 1 to 5,
wherein the plurality of fibrous fillers are natural fibers.

7. The composite resin molded body of any one of Claims 1 to 6,
wherein the main resin is an olefin resin.
